# EUROPÄISCHE PATENTANMELDUNG

(11) **EP 0 811 776 A2**
(43) Veröffentlichungstag der Anmeldung: **10.12.1997**
(21) Anmeldenummer: 97107145.1
(22) Anmeldetag: 30.04.1997
(51) Int. Cl.: F16B 39/34

(54) **Schraubensicherung**

(30) Priorität: 07.06.1996 DE 19622756
(71) Anmelder: MAICO ELEKTROAPPARATE-FABRIK GmbH, D-78056 Villingen-Schwenningen (DE)
(72) Erfinder: Busch, Norbert, 78112 St. Georgen (DE); Bolli, Alfred, 78054 Vs-Schwenningen (DE); Heger, Michael, Dipl.-Ing., 78054 Vs-Schwenningen (DE); Kaiser, Kurt, 78050 Vs-Villingen (DE); Kirchner, Jürgen, 78056 Vs-Schwenningen (DE); Schwald, Dieter, 78073 Bad Dürrheim (DE); Schmider, Jürgen, 78078 Niedereschach (DE)
(74) Vertreter: Grosse, Rainer, Dipl.-Ing.

(57) **Zusammenfassung**

Die Erfindung betrifft eine Schraubensicherung zum Verhindern eines Verdrehens von Gewindeschrauben, die ein auf den Schraubenkopf wirkendes Haltemittel aufweist. Es ist vorgesehen, daß das Haltemittel von mindestens einem, sich an den Schraubenkopfumfang durch das Einschrauben der Schraube unter permanenten Klemmdruck anlegenden Vorsprung (10), insbesondere Kunststoffvorsprung, gebildet ist.

## Beschreibung

Die Erfindung betrifft eine Schraubensicherung zum Verhindern eines Verdrehens von Gewindeschrauben, die ein auf den Schraubenkopf wirkendes Haltemittel aufweist.

Eine Schraubensicherung der eingangs genannten Art ist bekannt. Diese besteht aus einem Lacktropfen oder dergleichen, der -nach Einschrauben der Gewindeschraube- teilweise auf den Schraubenkopf und teilweise auf das an den Schraubenkopf angrenzende Material, in den die Schraube eingebracht ist, aufgebracht wird. Der Sicherungslack härtet an der Luft und legt somit die Schraube dauerhaft fest.

Ferner können Metallkleber oder in Mikrokapseln enthaltene Klebstoffe verwendet werden, um den Schraubenkopf und/oder das Schraubengewinde gegen Verdrehen zu sichern.

Schließlich ist es bekannt für die Sicherung von Schrauben Federringe, Zahnscheiben oder dergleichen zu verwenden, das heißt, diese Elemente werden mittels des Schraubenkopfes beim Einschrauben der Gewindeschraube verspannt, so daß sie von unten her gegen den Kopf drücken und diesen dadurch fixieren.

Der Erfindung liegt die Aufgabe zugrunde, eine weitere, einfache und wirksame Schraubensicherung zu schaffen.

Diese Aufgabe wird erfindungsgemäß dadurch gelöst, daR das Haltemittel von mindestens einem, sich an den Schraubenkopfumfang durch das Einschrauben der Schraube unter permanten Klemmdruck anlegenden Vorsprung, insbesondere Kunststoffvorsprung, gebildet ist. Beim Eindrehen der Gewindeschraube gelangt der Schraubenkopfumfang in Anlage an den Vorsprung, so daß dieser eine Radialkraft auf den Schraubenkopf ausübt. Diese Radialkraft bleibt permanent erhalten, das heißt, aufgrund des ständig wirkenden Klemmdrucks ist dauerhaft eine Verdrehsicherung der Gewindeschraube gewährleistet. Der Vorsprung ist derart angeordnet und/oder ausgebildet, daß der Klemmdruck -selbst wenn er sich im Laufe der Zeit verringert- stets in Form einer radial wirkenden Restkraft aufrechterhalten bleibt, so daß die Sicherungsfunktion erhalten ist. Sofern der Vorsprung als Kunststoffvorsprung ausgebildet ist, wird ein Kunststoff gewählt, dessen Kaltfließeigenschaften sicherstellen, daß der permanent wirkende Klemmdruck auf die Umfangswandung des Schraubenkopfes realisiert ist.

Nach einer Weiterbildung der Erfindung ist vorgesehen, daß das Haltemittel einen Abstand zur Drehachse der Gewindeschraube aufweist, der kleiner als der Radius des Schraubenkopfes ist. Dies hat zur Folge, daß beim Einschrauben der Gewindeschraube das Haltemittel vom Schraubenkopf nach außen gedrängt wird, wodurch der erwähnte Klemmdruck auftritt.

Insbesondere kann vorgesehen sein, daß das Haltemittel als Ringsteg ausgebildet ist, dessen den Schraubenkopf aufnehmender Innendurchmesser kleiner als der Durchmesser des Schraubenkopfes ausgebildet ist. Wird somit die Gewindeschraube eingebracht, so drängt sich der Schraubenkopf in den Ringsteg hinein, so daß dieser radial nach außen gedrängt wird und den Klemmdruck aufbringt. Insbesondere kann der Ring mindestens einen Radialschlitz aufweisen, so daß die Aufweitung des Ringes erleichtert wird und Rißbildungen oder dergleichen nicht auftreten. Durch den Radialschlitz wird ferner quasi eine Federwirkung erzielt, die von den Ringsegmentwänden auf den Schraubenkopf ausgeübt wird.

Es ist vorteilhaft, wenn die Gewindeschraube mit ihrem Schaft in eine Aufnahmebohrung eines Kunststoffkörpers eingreift und daR das Haltemittel einstückig mit dem Kunststoffkörper, insbesondere im Spritzgußverfahren, ausgebildet ist. Soll die Gewindeschraube in die Aufnahmebohrung des Kunststoffkörpers, beispielsweise ein Kunststoffgehäuse eines Ventilators, eingebracht werden, so wird bei der Herstellung des Kunststoffgehäuses sogleich die Aufnahmebohrung im Spritzgußverfahren mitausgebildet. Erfindungsgemäß wird ferner auch das als Vorsprung realisierte Haltemittel beim Spritzgießen miterzeugt, was keine wesentlichen zusätzlichen Aufwendungen erfordert. Mithin ist die Schraubensicherung einstückig mit dem Kunststoffkörper ausgebildet und im gleichen Herstellungsschritt, nämlich dem Spritzgießen, realisiert.

Schließlich ist es vorteilhaft, wenn das Haltemittel eine in Einschraubrichtung, also axial, wirkende Auflaufschräge für den Schraubenkopf aufweist. Auf diese Auflaufschräge setzt der Schraubenkopf mit seiner Unterseite während des Einschraubvorganges auf und führt -im Zuge des weiteren Einschraubens- zu einer Radialkraft auf den Sicherungsvorsprung.

Die Zeichnungen veranschaulichen die Erfindung anhand eines Ausführungsbeispiels und zwar zeigt:
- Figur 1: eine Rückansicht auf ein aus Kunststoff bestehendes Ventilatorgehäuse,
- Figur 2: eine Schnittansicht auf den Endbereich des Ventilatorgehäuses der Figur 1 entlang der Pfeile II-II in Figur 1,
- Figur 3: eine Detailansicht einer Schraubensicherung des Gehäuses gemäß der Figuren 1 und 2 und
- Figur 4: einen Draufsicht auf die Schraubensicherung der Figur 3.

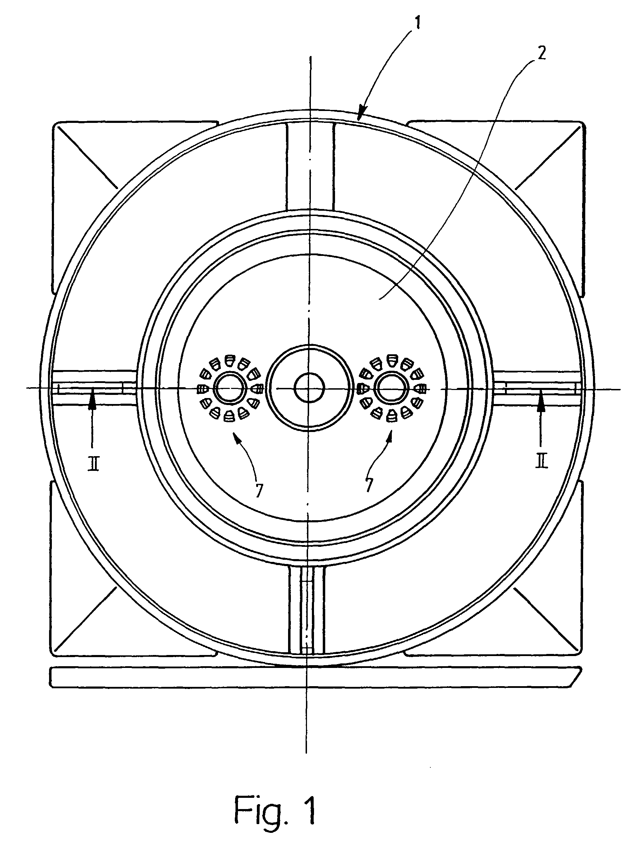

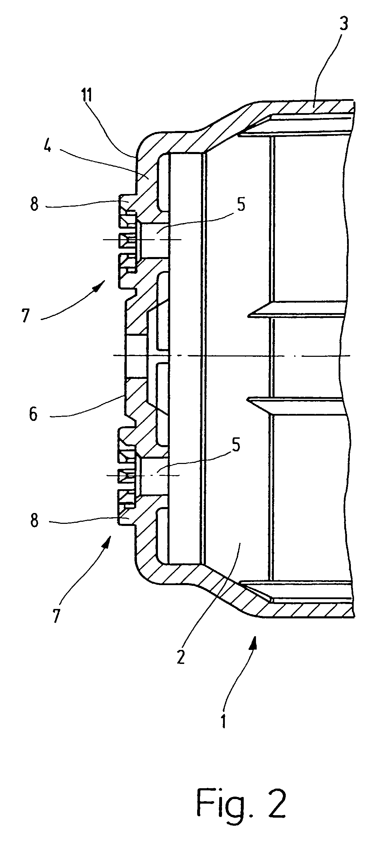

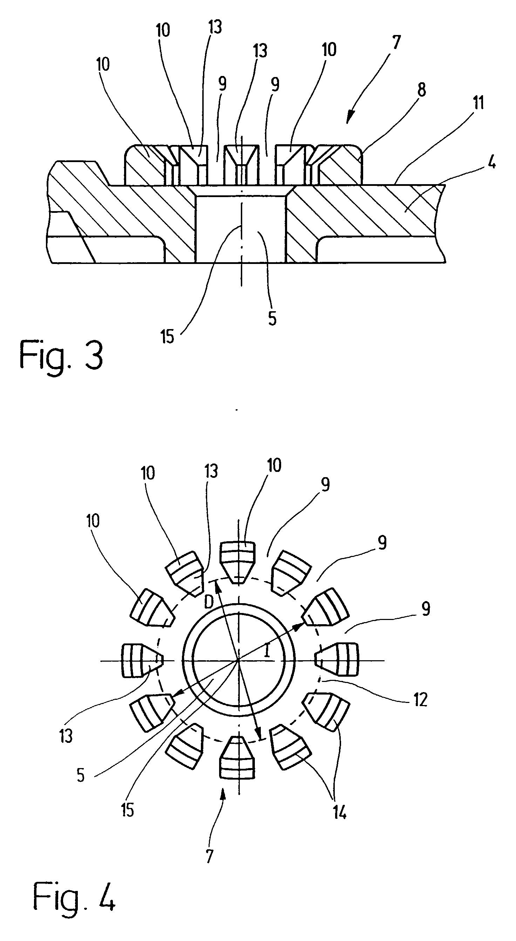

Die Figur 1 zeigt ein im Spritzgußverfahren einstückig hergestelltes Ventilatorgehäuse 1, das ein zentrales, becherförmiges, der Aufnahme eines elektrischen Antriebsmotors des Ventilators dienendes Motorgehäuse 2 aufweist. Dies besitzt -gemäß Figur 2- eine im Querschnitt kreisförmige Mantelwand 3 sowie einen Boden 4. Der Boden 4 wird von zwei Aufnahmebohrungen 5 durchsetzt, in die Gewindeschrauben eingesteckt werden, welche in Gewindebohrungen des nicht dargestellten Elektromotors eingeschraubt werden. Auf diese Art und Weise wird der Elektromotor innerhalb des Motorgehäuses 2 gehalten. Auf der Außenseite des Bodens 4 befindet sich -angrenzend an die jeweilige Aufnahmebohrung 5- jeweils eine Schraubensicherung 7. Da die beiden Schraubensicherungen 7 identisch ausgebildet sind, wird nachstehend nur noch auf eine Schraubensicherung 7 eingegangen. Diese wird von einem geschlitzt ausgebildeten Ringsteg 8 gebildet (Figur 3), wobei durch die einzelnen Radialschlitze 9 Vorsprünge 10 ausgebildet werden. Jeder der Vorsprünge 10 überragt die Außenseite 11 des Bodens 4. Die Höhe der einzelnen Vorsprünge 10 kann etwa der Höhe des Kopfes einer Gewindeschraube entsprechen, die in die Aufnahmebohrung 5 eingesteckt wird. Es ist jedoch auch möglich, daß die Höhe der Vorsprünge 10 kleiner als die Höhe des Schraubenkopfes ist.

Gemäß Figur 4 ist der Innendurchmesser I des geschlitzten Ringstegs 8 kleiner als der Durchmesser des mit gestrichelter Linie eingezeichneten Schraubenkopfes 12 einer in die Aufnahmebohrung 5 eingreifenden Gewindeschraube. Jeder einzelne Vorsprung weist -zur Aufnahmebohrung 5 hin- eine sich verjünge Breite auf, das heißt, jeder Vorsprung 10 verjüngt sich in Richtung auf die Aufnahmebohrung 5. Ferner besitzt jeder Vorsprung 10 eine Auflaufschräge 13, die von der Stirnwandung 14 jedes Vorsprungs 10 ausgeht und schräg in Richtung auf die Aufnahmebohrung 5 geneigt verläuft.

Wird nun die Gewindeschraube in die Aufnahmebohrung 5 eingesteckt und anschließend mittels eines geeigneten Werkzeugs in den nicht dargestellten Elektromotor eingeschraubt, so bewegt sich der Schraubenkopf 12 in Richtung auf den Boden 4, wobei er mit seiner Unterseite auf die Auflaufschrägen 13 der einzelnen Vorsprünge 10 auftrifft. Da der Durchmesser D des Schraubenkopfes 12 größer als der Innendurchmesser I des geschlitztes Ringstegs 8 ist, werden die einzelnen von den Ringsegmenten gebildeten Vorsprünge 10 radial beaufschlagt, wobei sie teils radial ausfedern und teils aufgrund von Fließeigenschaften verformt werden. Dies ist möglich, weil die Vorsprünge 10 aus Kunststoff bestehen. Sie sind vorzugsweise einstückig mit dem Gehäuse 1 des Ventilators, also einstückig mit dem dem Motorgehäuse 2, im Kunststoffspritzgußverfahren hergestellt. Dies hat zur Folge, daß bei vollständig eingedrehter Gewindeschraube die einzelnen Vorsprünge 10 unter Klemmdruck am Schraubenkopfumfang anliegen und auf diese Art und Weise eine Schraubensicherung gegen ein unbeabsichtigtes Verdrehen bilden.

## Patentansprüche

1. Schraubensicherung zum Verhindern eines Verdrehens von Gewindeschrauben, die ein auf den Schraubenkopf wirkendes Haltemittel aufweist, **dadurch gekennzeichnet**, daß das Haltemittel von mindestens einem, sich an den Schraubenkopfumfang durch das Einschrauben der Schraube unter permanenten Klemmdruck anlegenden Vorsprung (10), insbesondere Kunststoffvorsprung, gebildet ist.

2. Schraubensicherung nach Anspruch 1, **dadurch gekennzeichnet**, daß das Haltemittel einen Abstand zur Drehachse (15) der Gewindeschraube aufweist, der kleiner als der Radius des Schraubenkopfes (12) ist.

3. Schraubensicherung nach einem der vorhergehenden Ansprüche, **dadurch gekennzeichnet**, daß das Haltemittel als Ringsteg (8) ausgebildet ist, dessen den Schraubenkopf (12) aufnehmender Innendurchmesser (I) kleiner als der Durchmesser (D) des Schraubenkopfes (12) ausgebildet ist.

4. Schraubensicherung nach einem der vorhergehenden Ansprüche, **dadurch gekennzeichnet**, daß der Ringsteg (8) mindestens einen Radialschlitz (9) aufweist.

5. Schraubensicherung nach einem der vorhergehenden Ansprüche, **dadurch gekennzeichnet**, daß die Gewindeschraube mit ihrem Schaft in eine Aufnahmebohrung (5) eines Kunststoffkörpers (Boden 4) eingreift und daß das Haltemittel einstückig mit dem Kunststoffkörper, insbesondere im Spritzgußverfahren, ausgebildet ist.

6. Schraubensicherung nach einem der vorhergehenden Ansprüche, **dadurch gekennzeichnet**, daß das Haltemittel eine in Einschraubrichtung wirkende Auflaufschräge (13) für den Schraubenkopf (12) aufweist.
